# EUROPEAN PATENT SPECIFICATION

(11) **EP 2 006 178 B1**
(45) Date of publication and mention of the grant of the patent: **15.12.2010**
(21) Application number: 07110523.3
(22) Date of filing: 19.06.2007
(51) Int. Cl.: B60W 20/00, B60K 6/442, F01N 3/20, F02D 41/02

(54) **A hybrid vehicle, a hybrid vehicle propulsion system and a method for an exhaust gas treatment device in a such a system**
Hybridfahrzeug, Antriebssystem für ein Hybridfahrzeug und Verfahren für eine Abgasverarbeitungsvorrichtung in einem solchen System
Véhicule hybride, système de propulsion de véhicule hybride et procédé de dispositif de traitement de gaz d'échappement dans un tel système

(43) Date of publication of application: 24.12.2008
(73) Proprietor: Ford Global Technologies, LLC, Dearborn, MI 48126 (US)
(72) Inventor: Hermansson, Jonas, SE-437 32 Lindome (SE); Johnsson, Anders, SE-416 55 Göteborg (SE); Vollmer, Niklas, SE-430 31 Åsa (SE)
(74) Representative: Holmberg, Magnus

(56) References cited:
- EP-A1- 1 174 612
- EP-A2- 0 935 056
- DE-A1- 10 111 787
- US-A1- 2003 224 907
- US-A1- 2004 194 452

## Description

### TECHNICAL FIELD

The present invention relates to a hybrid vehicle, to a method according to the preamble of claim 1, and to a hybrid vehicle propulsion system according to the preamble of claim 10.

### BACKGROUND

The drivetrain of a hybrid vehicle includes two combined power sources for the propulsion of the vehicle. Usually an internal combustion engine is combined with an additional power source connected to or including an energy storage unit which can be charged by the internal combustion engine, and, in many solutions, also by recovery the braking energy of the vehicle.

In so called hybrid electric vehicles the additional power source is an electric motor connected to an energy storage unit including rechargeable electric accumulators for energy storage. In alternative hybrids the additional power source could include, instead of electric components, a variable displacement pump communicating with a hydraulic accumulator for energy storage, essentially in the form of a pressure tank. There are also hybrid concepts in which the additional power source includes a flywheel which stored energy and is connected to a hydrostatic transmission. In further hybrid ideas the additional power source includes an air engine connected to an air tank for energy storage. The additional power source can also be a human, such as in the case with a moped.

The drivetrain of a hybrid vehicle can be provided as a parallel hybrid arrangement, in which the engine and the additional power source (e.g. electric motor) are both connected to a mechanical transmission for delivering torque to the wheels. Where the additional power source is an electric motor, this is often provided as a combined generator and motor. Differing from parallel hybrid arrangements, in a series hybrid arrangement there is no power path from the engine to the wheels. The main task of the engine is to provide power to the additional power source and/or the energy storage unit connected thereto. Combined hybrids have features from both parallel and series hybrid arrangements, in that they have power split devices allowing the power path from the engine to be mechanically directed to the wheels, or to be directed to the additional power source or the energy storage unit connected thereto.

The operation of most hybrid vehicles with internal combustion engines usually includes a number of different modes for the power distribution in the drivetrain. For example, the vehicle can be run in a cruise mode, in which the power from the engine is split into a path to the wheels and a path to the energy storage unit, e.g. to batteries via a generator. As another example, the vehicle can be run in an energy storage unit charge mode, (for a hybrid electric vehicle usually referred to as a battery charge mode), during engine idling, in which the energy storage unit is charged by the engine, e.g. via a generator. In parallel or combined hybrid arrangements, there could also be a power boost mode in which power is provided to the wheels from both the engine and the power source, e.g. an electric motor, of the additional power source.

In addition, the operation of most hybrid vehicles with internal combustion engines usually includes engine off modes, in which the internal combustion is shut down. Such modes can include a mode in which propulsion is provided only by the additional power source. An example of such a mode is a so called electric vehicle mode in a combined or parallel hybrid electric vehicle. In order for the vehicle to be able to run in an engine off mode, necessary accessories have to be powered by the additional power source.

Usually, one or more exhaust gas treatment devices, known as catalytic converters, are provided in the exhaust system of the engine. Catalytic converters convert toxic gases such as hydrocarbons (HC), carbon monoxide (CO) and nitrogen oxides (NOx) into substances such as carbon dioxide (CO2), nitrogen (N2) and water (H2O). A catalytic converter can not fully exhibit its converting effects when the temperature thereof is lower than its activation temperature. A problem with hybrid vehicles is that during engine off modes, the catalyst converter temperature can fall below the activation temperature, in which case emissions ofHC and NOx are likely to be released in large quantities when the internal combustion engine is started again.

A number of solutions for rapidly heating the catalytic converter during cold starts are known. The patent publication US6161377 suggests heating the catalytic converter by introducing secondary air into the exhaust gases, combined with providing a rich mixture to the cylinders. A disadvantage with this method is that it requires an additional component in the form of an air pump for the introduction of the secondary air, adding to the complexity and the cost of the engine system. The patent publication US6901749 discloses, in order to heat the catalytic converter, providing a rich mixture to the engine cylinders combined with adjusting the ignition timing so as to provide a relatively late ignition during the engine cycles. However, if the ignition delay is too large, combustion instability might follow, and in addition this measure causes vibration and affects the vehicle drivability negatively. Also, it increases the fuel consumption, reduces the available torque of the engine, and, since the energy for heating the catalytic converter is transported thermally, there are substantial energy losses between the engine and the catalytic converter in the form of temperature decrease.

US2004/0194452A1 suggests injecting fuel at the time of restart of the engine in a hybrid vehicle in order for the catalyst, still warm and storing oxygen, to immediately restart the reduction process using the fuel. DE10111787A1 describes a special heater for a catalyst for rapid heating at a cold start. However, US2004/0194452A1 and DE10111787A1 are not concerned with keeping the catalyst warm during engine shut-off conditions.

EP0935056A2 describes shutting off ignition in one or more cylinders when cranking during engine start to heat a cold catalyst. EP1174612A1 describes, in a diesel engine application for regeneration of a particulate filter or a NOx-trap, injecting fuel into the cylinders during an engine brake situation. However, EP0935056A2 and EP1174612A1 do not concern hybrid vehicles, and particularly, they do not describe engine shut-off modes in hybrid vehicles.

### SUMMARY OF THE INVENTION

It is an object of the present invention to decrease emissions from a vehicle with a hybrid propulsion system including an internal combustion engine.

It is also an object of the present invention to provide optimum efficiency of an exhaust gas treatment device in a vehicle with a hybrid propulsion system including an internal combustion engine.

These objects are reached with a method of the type mentioned initially, presenting the features of the characterizing portion of claim 1.

This means that the air and fuel provided to the exhaust gas treatment device can be combusted therein, in order to prevent the temperature of the exhaust gas treatment device from falling below its activation temperature during the engine off mode. Thus, when the engine is started again, the exhaust gas treatment device is immediately fully capable of exhibiting all its converting effects, and therefore cold start emissions are avoided. Thus, an optimum efficiency of the exhaust gas treatment device is maintained at the engine stop mode, and emissions from the hybrid vehicle propulsion system are decreased.

Preferably, the step of pumping air to the exhaust gas treatment device comprises rotating the crankshaft of the engine by means of the additional power source, and the step of controlling the fuel provision means comprises controlling the fuel provision means so that fuel is allowed into at least one of the cylinders. In the engine off mode, combustion in the at least one cylinder is inhibited. In a spark ignition engine this involves inhibiting sparks. This means that the engine, with the crankshaft rotated by means of the additional power source and its piston(s) therefore moving in the cylinder(s), will work as an air pump, pumping air to the exhaust gas treatment device. The fuel allowed into at least one of the cylinders will also be transported to the exhaust gas treatment device, in which the air and fuel is combusted, in order to prevent the temperature of the exhaust gas treatment device from falling below its activation temperature during the engine off mode.

Rotating the crankshaft of the engine by means of the additional power source can for example be done by one or more transmissions, at least one of which provides a power split function.

Preferably, the method comprises determining the temperature of the exhaust gas treatment device, the amount of fuel allowed into the at least one of the cylinders, in the step of controlling the fuel provision means, being controlled in dependence on the temperature of the exhaust gas treatment device. For example, if it is desired to decrease the exhaust gas treatment device temperature, the amount of fuel provided can be decreased, and vice versa. The control of the provided amount of fuel allows for an advantageous manner of monitoring and controlling the exhaust gas treatment device temperature.

Preferably, the method comprises controlling, during the step of rotating the crankshaft of the engine by means of the additional power source, air flow control means of the engine so as to control the combustion in the exhaust gas treatment device. By adjusting the air flow, for example based on the flow of fuel provided, it can be secured that a combustible air/fuel mixture is provided to the catalytic converter during the measures to prevent the temperature of the exhaust gas treatment device from falling below its activation temperature. Also, controlling the combustion in the exhaust gas treatment device could comprise controlling a location or a region of a maximum temperature in the exhaust gas treatment device. Thereby, as explained closer below, the air flow control means, for example comprising a throttle valve, can be used to control the temperature distribution in a longitudinal direction of the catalytic converter. Moving the maximum temperature in this way further reduces the risk of damaging the catalytic converter by high temperature exposure. Specially, the risk of excessive temperatures in an upstream end of the catalytic converter can be substantially reduced, so that catalytic converter damage can be effectively avoided.

Preferably, the fuel provision means comprises fuel injection means, and the step of controlling the fuel provision means comprises controlling the fuel injection means so that fuel is allowed into at least one of the cylinders.

By allowing fuel injection while combustion is inhibited, the fuel can be thoroughly mixed with air in the cylinder(s). The long transportation after the cylinder(s) allows additional mixture of the air and fuel before reaching the catalytic converter. This provides a homogeneous distribution of fuel and air across the lateral extensions of the catalytic converter, in which the mixture is combusted so as to effectively heat the exhaust gas treatment device with minimal risks of damage to the catalytic converter. This is provided simply by use of the fuel injection means, without the need for additional equipment in the engine system.

Also, rotating the crankshaft of the engine by means of the additional power source, and controlling the fuel injection means so that fuel is allowed into at least one of the cylinders does not, in contrast to many traditional catalyst heating strategies, cause disturbance to drivers and passengers in the vehicle, and it does not lead to any vibration in the vehicle. Also, since the energy for heating the catalytic converter is transported chemically, i.e. in the air/fuel mixture, and converted to thermal energy in the catalytic converter, there are essentially no energy losses between the engine and the catalytic converter.

Preferably, where the internal combustion engine comprises at least two cylinders, the method further comprises determining the temperature of the exhaust gas treatment device, the number of cylinders into which fuel is allowed, in the step of controlling the fuel injection means, being dependent on the temperature of the exhaust gas treatment device. Thus, fuel can be injected in one or more of the cylinders, depending on the exhaust gas treatment device temperature. For example, if it is desired to decrease the exhaust gas treatment device temperature, the number of cylinders in which fuel is injected while ignition is inhibited can be decreased, and vice versa.

In some embodiments of the invention, the fuel provision means comprises a fuel vapor retainer and valve means for controlling a supply of purge gas from the fuel vapor retainer to the engine, and the step of controlling the fuel provision means comprises controlling the valve means so that purge gas is allowed into at least one of the cylinders. By using purge gas from a fuel vapor retainer, air and fuel can be introduced into the inlet manifold mixed, and be thoroughly mixed with air in the cylinder(s), and be further mixed between the cylinder(s) and the catalytic converter. This provides a homogenous distribution of fuel and air across the lateral extensions of the catalytic converter, in which the mixture is combusted so as to heat the exhaust gas treatment device.

As exemplified below, in some embodiments of the invention the hybrid vehicle comprises an air pump adapted to supply air downstream of the cylinder, and the fuel provision means comprises a fuel pump adapted to supply fuel downstream of the cylinder, the step of pumping air to the exhaust gas treatment device comprising engaging the air pump, the step of controlling the fuel provision means comprising engaging the fuel pump.

The objects are also reached with a hybrid vehicle propulsion system according to any of the claims 10-18, and with a hybrid vehicle comprising a propulsion system according to any of the claims 10-18.

### DESCRIPTION OF THE FIGURES

Below, the invention will be described in detail with reference to the drawings, in which
- fig. 1 shows a schematic view of a hybrid vehicle propulsion system with a combined hybrid structure,
- fig. 2 shows schematically certain of the hybrid vehicle propulsion system parts in fig. 1 in some detail,
- fig. 3 shows a block diagram depicting a method according to a preferred embodiment of the invention,
- fig. 4 is a schematic side view of a detail in fig. 2 with temperature distribution curves,
- fig. 5 shows a schematic view of a hybrid vehicle propulsion system with a parallel hybrid structure,
- fig. 6 shows schematically certain of the hybrid vehicle propulsion system parts in fig. 5 in some detail,
- fig. 7 shows a block diagram depicting a method according to an alternative embodiment of the invention,
- fig. 8 shows a schematic view of a hybrid vehicle propulsion system with a series hybrid structure, and
- fig. 9 shows a block diagram depicting a method according to a further alternative embodiment of the invention.

### DETAILED DESCRIPTION

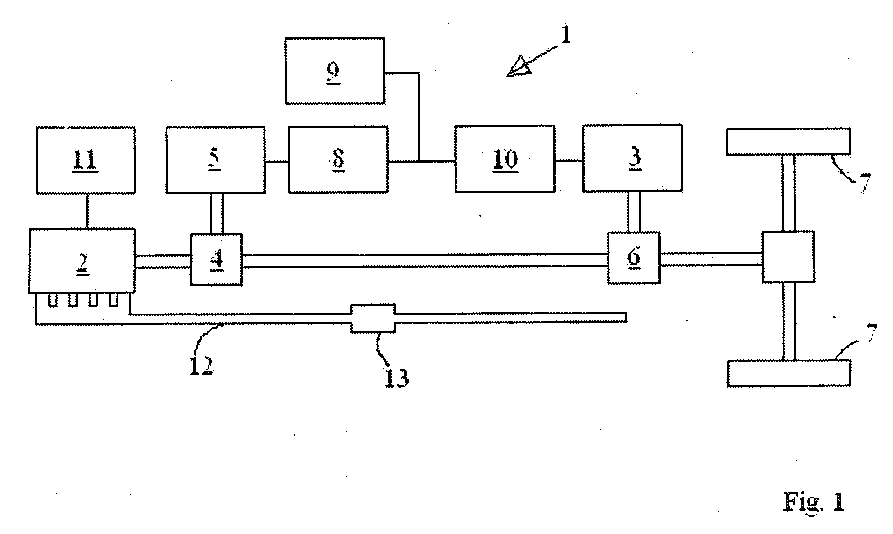

Fig. 1 shows parts of a hybrid vehicle propulsion system 1 with a combined hybrid structure, the propulsion system 1 comprising an internal combustion engine 2 and an additional power source 3 in the form of an electric motor 3. A first transmission 4 provides in a manner known in the art a mechanical connection between the engine 2, a generator 5 and a second transmission 6, which in turn provides a mechanical connection between the engine 2 via the first transmission 4, the motor 3 and two wheels 7 of the vehicle. The generator 5 is electrically connected to a charger 8, which in turn is connected to an energy storage unit 9 comprising a plurality of batteries, and to a converter 10, the latter being connected to the motor 3. Fuel storage means 11 comprising a fuel tank 11, and an exhaust system 12 with an exhaust treatment device 13 in the form of a catalytic converter 13 are provided for the engine 2.

The transmissions 4, 6 are controllable as described below and work as power split devices to allow the power path from the engine 2 to be mechanically directed to the wheels 7, or to be directed via the generator 5 and the charger 8 to the motor 3 or to the batteries 9. The transmissions 4, 6 also allow mechanical power from the motor 3 to be directed to the engine 2, as discussed closer below.

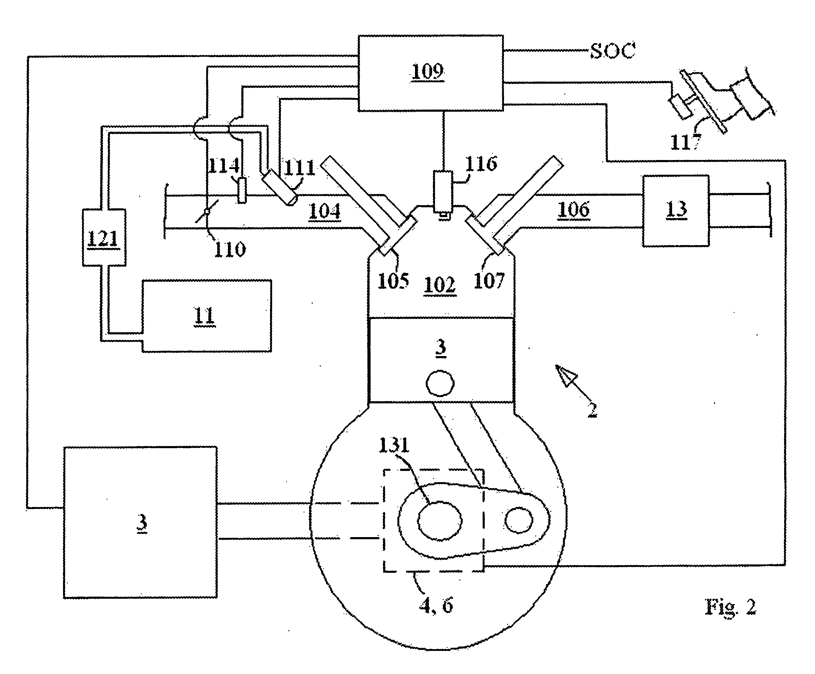

Fig. 2 shows schematically certain of the hybrid vehicle propulsion system parts in fig. 2 in some detail. The internal combustion engine 2 comprises at least one cylinder 102 with a reciprocating piston 103 connected to a crankshaft 131. The crankshaft 131 is mechanically connected to the motor 3 via the transmissions 4, 6 as also depicted in fig. 1, (the transmissions 4, 6 being depicted in fig. 2 with broken lines).

Communication between the cylinder 102 and an inlet duct 104 is controlled by at least one inlet valve 105, and communication between the cylinder 102 and an exhaust duct 106 is controlled by at least one exhaust valve 107. Downstream from the cylinder(s) 102, the catalytic converter 13 is provided.

The propulsion system 1 also comprises a control unit 109, which has computational and data memory capacities, and which can be provided as one unit, or as more than one logically interconnected physical units. The control unit 109 is adapted to control air flow control means comprising a throttle valve 110, and fuel injection means 111 comprising at least one fuel injector 111 in the inlet duct 104. In this embodiment, where the engine presents more than one cylinder, the fuel injection can be controlled individually for each cylinder, by a fuel injector being provided at a separate portion of the inlet duct 104 communicating with the respective cylinder, (so called port fuel injection). Alternatively, as is known in the art, a fuel injector can be provided in each cylinder 102, (so called direct fuel injection). As a further alternative, one single fuel injector can be provided for more than one cylinder, or all cylinders, for example at an upstream portion of the inlet duct communicating with more than one cylinder, or all cylinders. The fuel injection means 111 communicate with the fuel tank 11, via a fuel pump 121.

In addition, the control unit 109 is also adapted to determine the engine air flow based on signals received from an air flow sensor 114 located in the inlet duct 104. As an alternative, as is known in the art, the air flow can be computed based on parameters such as the inlet manifold pressure, throttle position, engine speed, inlet temperature, and atmospheric pressure. Manners of determining the values of these parameters are known in the art, and not explained further here.

Further, at each cylinder, ignition means 116 comprising a spark plug 116 are provided and controllable by the control unit 109.

The control unit 109 is adapted to determine the temperature of the catalytic converter 13 based at least partly on the air flow, the lambda value, the ambient temperature, engine load, and engine rotational speed. As an alternative, the control unit 109 can be adapted to receive signals from a temperature sensor located in the exhaust duct 106 between the cylinder 102 and the catalytic converter 13, or in the catalytic converter 13, based on which signals, the catalytic converter temperature can be determined.

The control unit 109 is further adapted to receive data corresponding to a state of charge (SOC) of the batteries 9 (fig. 1). In addition, the control unit 109 is adapted to adjust, as known in the art, the value of a requested torque parameter based on signals from an accelerator pedal 117 in the vehicle. Based at least partly on the SOC and the requested torque, the control unit 109 is adapted to determine whether the propulsion system 1 is to operate in a cruise mode, a battery charge mode, a power boost mode, or an electric vehicle mode, the latter being an engine off mode. Such operational modes have been briefly described above in the section "Background".

The control unit 109 is further adapted to control the output torque of the motor 3. The control unit 109 is also adapted to control, in manners known in the art, activators (not shown) in the transmissions 4, 6 for control of power paths therein. By suitable control of the motor 3, the transmissions 4, 6 and the engine, power paths in the propulsion system 1 can be controlled and operational modes of the propulsion system 1 can be chosen.

In the engine off mode, in dependence as described below on the catalytic converter 13 temperature, the control unit 109 is adapted to control the fuel injection means 111 and the ignition means 116 so that fuel injection and ignition are inhibited.

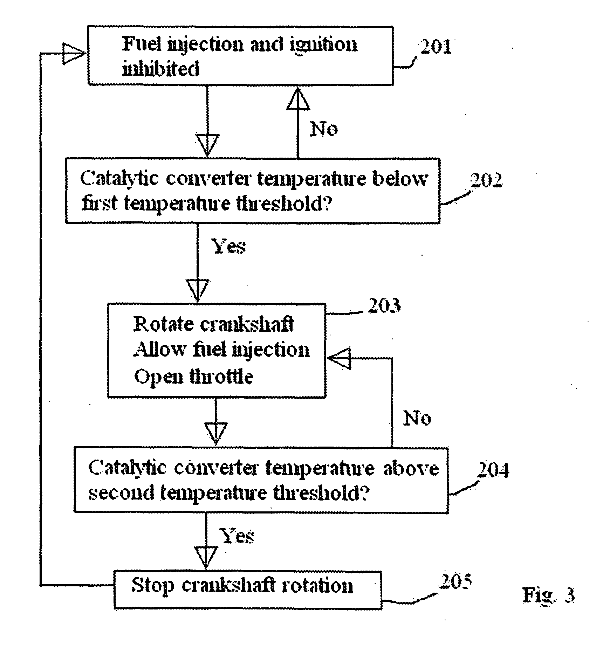

Fig. 3 depicts a method according to a preferred embodiment of the invention. The control unit 109 determines 201 based on the SOC and the requested torque that the propulsion system 1 is to operate in an electric vehicle mode, and fuel injection and ignition are inhibited. While fuel injection and ignition are inhibited, the catalytic converter 13 temperature is monitored. The control unit 109 determines 202 whether the catalytic converter 13 temperature is below a predetermined first temperature threshold value. If it is determined that the catalytic converter 13 temperature is not below the first temperature threshold value, the fuel injection and ignition remain inhibited.

If it is determined that the catalytic converter 13 temperature is below the first temperature threshold value, converter activation maintaining measures are taken 203, in which the ignition remains inhibited, but the motor 3 and the transmissions 4, 6 are controlled so that the crankshaft 131 is rotated by means of the motor 3. Also, fuel injection is allowed. In addition, the throttle valve 110 is controlled so as to be open. Thereby, by means of the piston 103 movement(s), air is pumped through the cylinder(s) 103, and air and fuel is transported from the cylinder(s) 102 and through the exhaust duct 106, in which a substantially homogenous air/fuel mixture is provided. The mixture reaches the catalytic converter 13 where it is combusted to increase the catalytic converter 13 temperature. Thereby, further decrease of the catalytic converter 13 temperature is prevented, and it can remain activated.

While the converter activation maintaining measures are taken, the catalytic converter 8 temperature is monitored. Thereby, the control unit 109 determines 204 whether the catalytic converter 13 temperature is above a predetermined second temperature threshold value, which is higher than the first temperature threshold value. If it is determined that the catalytic converter 13 temperature is not above the second temperature threshold value, the converter activation maintaining measures are continued 203. If it is determined that the catalytic converter 13 temperature is above the second temperature threshold value, the motor 3 and the transmissions 4, 6 are controlled 205 so that rotation of the crankshaft 131 stops and the fuel injection means 111 are controlled 201 so as to inhibit fuel injection. The control unit 109 continues to monitor the catalytic converter 13 temperature, and to determine 202 whether the catalytic converter 13 temperature is below the first temperature threshold value.

It should be noted that the invention is applicable to engines with any number of cylinders, i.e. one or more cylinders 102. In some embodiments of the invention, where the engine 2 has a plurality of cylinders 102, and the fuel injection can be controlled individually for each cylinder, the number of cylinders 102 into which fuel is allowed, while undertaking the converter activation maintaining measures, can be dependent on the temperature of the exhaust gas treatment device.

As an example, it can be assumed that the engine comprises four cylinders. During the converter activation maintaining measures, if the catalytic converter temperature is below a first temperature threshold value, fuel is injected into all cylinders. If the catalytic converter temperature is above a first temperature threshold value and below a second temperature threshold value, which is higher than the first temperature threshold value, fuel is injected in only two of the cylinders 102. If the catalytic converter temperature is above the second temperature threshold value, the converter activation maintaining measures are aborted. By controlling the number of cylinders in which fuel is injected during the converter activation maintaining measures, a coarse temperature control of the catalytic converter 13 is achieved.

Regardless of the number of cylinders in which fuel is injected during the converter activation maintaining measures, the amount of fuel injected in each cylinder can be controlled, so that a fine temperature control of the catalytic converter 13 is achieved. Additional or alternative temperature control can be provided by controlling the frequency of fuel injection pulses.

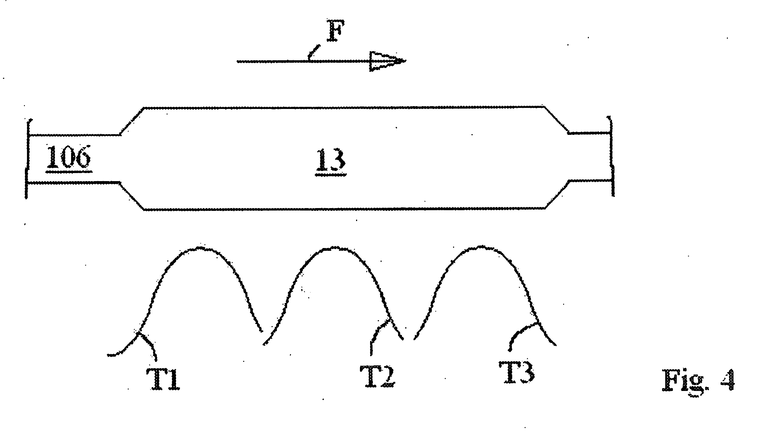

Reference is made to fig. 2 and 4. In some embodiments, the method comprises controlling the throttle valve 110 so as to control the combustion in the catalytic converter 13 during the converter activation maintaining measures. Based on the flow of fuel injected, the throttle is controlled so that a combustible air/fuel mixture is provided to the catalytic converter.

Referring to fig. 4, in which a gas flow direction is indicated with an arrow F, the throttle valve 110 is also used during the converter activation maintaining measures to control the location of a maximum temperature in the exhaust gas treatment device 13. By controlling the throttle valve 110 so that a relatively small air flow is provided, the air/fuel mixture will be combusted relatively far upstream in the catalytic converter 13. As a result, the temperature distribution in the catalytic converter, indicated in fig. 4 with the curve T1, will present a maximum relatively far upstream. By controlling the throttle valve 110 so that larger air flows are provided, the air/fuel mixture will be combusted further downstream in the catalytic converter 13. As a result, the temperature distribution in the catalytic converter, T2, T3, will present maximums further downstream, depending on the air flow. In other words, increasing the air flow will move the maximum temperature downstream.

Thus, the location of the maximum temperature can be changed during the converter activation maintaining measures, thereby securing that the temperature is kept above the activation temperature throughout the entire catalytic converter.

As an alternative to, or in addition to a throttle valve 110, the air flow control means can comprise control means (not shown) for the inlet valve(s) 5 and/or the exhaust valve(s) 7, for example in the form of a variable valve timing (VVT) system and/or a cam profile shifting (CPS) system. Such inlet and/or exhaust valve control means can be used as an alternative or in addition to the throttle valve 110 for controlling the combustion in the catalytic converter 13 during the converter activation maintaining measures.

It should be noted that instead of the motor 3, the crankshaft 131 can rotated by means a further power source of the propulsion system 1.

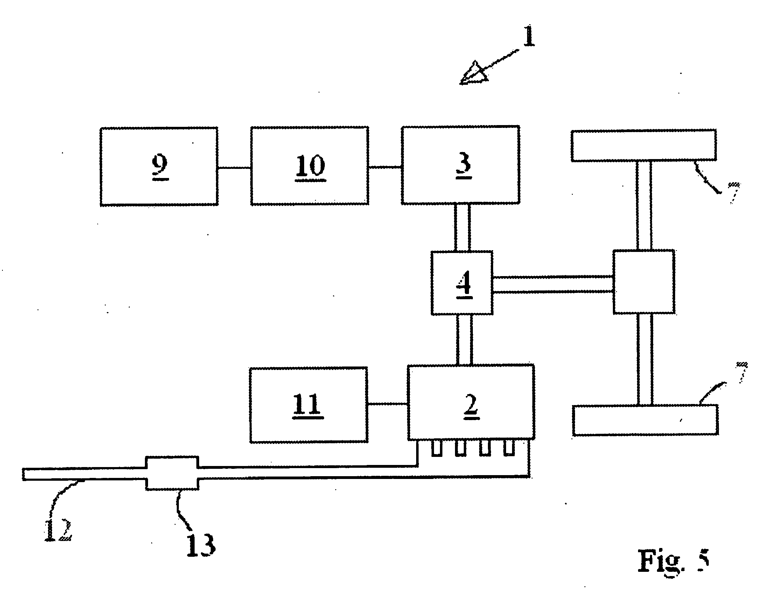

Referring to fig. 5, showing parts of a hybrid vehicle propulsion system 1 with a parallel hybrid structure, an alternative embodiment of the invention will be described. The propulsion system 1 comprises an internal combustion engine 2 and an additional power source 3 in the form of a combined electric motor and generator 3. The combined motor and generator 3 is via a converter 10 electrically connected to an energy storage unit 9 comprising a plurality of batteries. Fuel storage means 11 comprising a fuel tank 11, and an exhaust system 12 with an exhaust treatment device 13 in the form of a catalytic converter 13 are provided for the engine 2.

A transmission 4 provides in a manner known in the art a mechanical connection between the engine 2, the combined motor and generator 3 and two wheels 7 of the vehicle. The transmission 4 is controllable as described below and works as power split devices to allow the power path from the engine 2 to be mechanically directed to the wheels 7, or to the combined motor and generator 3. The transmission 4 also allows mechanical power from the combined motor and generator 3 to be directed to the engine 2, as discussed closer below.

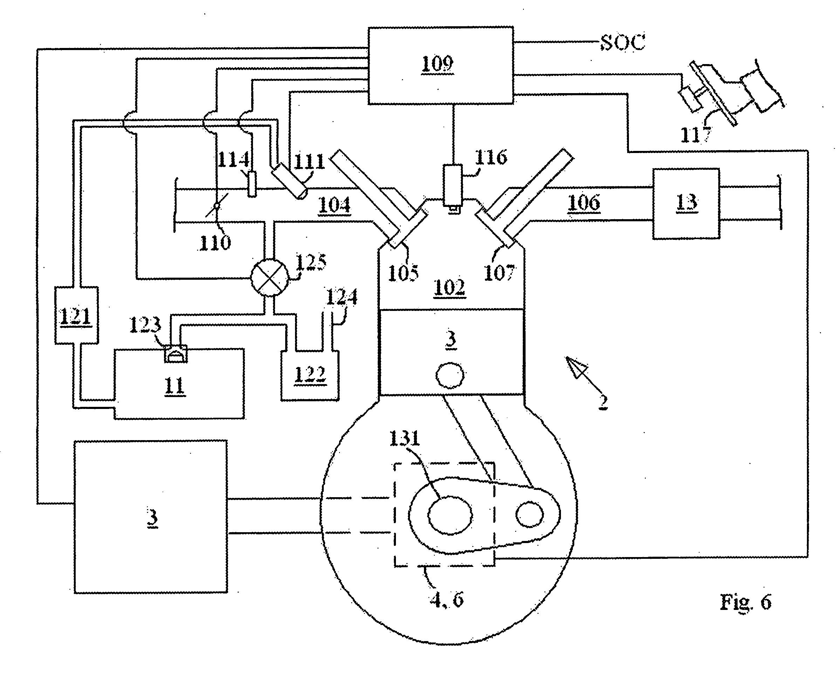

Fig. 6 shows schematically certain of the hybrid vehicle propulsion system parts in fig. 5 in some detail, which parts correspond to the ones described above with reference to fig. 2, except for the following details: The engine system is provided with a fuel vapor retainer in the form of a canister 122, which could enclose carbon for retaining vaporized fuel as known in the art. The canister 122 can communicate with the fuel tank 11 via a vapor vent valve 123. Further, the canister 122 is provided with a canister air inlet 124. The canister 122 and the fuel tank 11 can communicate with the inlet duct 4 via valve means in the form of a purge gas supply valve 25, which is controllable by the control unit 109.

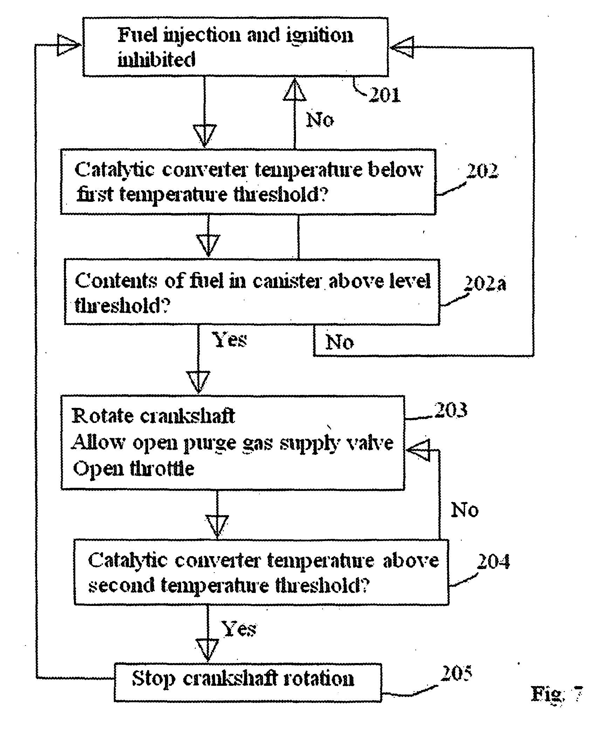

Fig. 7 depicts a method according to the alternative embodiment of the invention, in the hybrid vehicle propulsion system 1 in fig. 5. The method corresponds to the one that has been described above with reference to fig. 3, with some exceptions:

As in fig. 3, the control unit 109 determines 201 that the propulsion system 1 is to operate in an electric vehicle mode, and the catalytic converter 13 temperature is monitored. If it is determined 202 that the catalytic converter 13 temperature is below a first temperature threshold value, it is determined 202a whether the contents of fuel in the canister 122 is above a predetermined canister level threshold value. The contents of the canister 122 can be determined as is known in the art, for example based on measured values of lambda, injected fuel and air flow. If it is determined 202a that the contents of fuel in the canister 122 is below the threshold value, it is determined that no or alternative converter activation maintaining measures are carried out.

If it is determined 202a that the contents of fuel in the canister 122 is above the threshold value, converter activation maintaining measures are taken 203, in which the ignition remains inhibited, but the motor 3 and the transmission 4 is controlled so that the crankshaft 131 is rotated by means of the combined motor and generator 3. Also, the purge gas supply valve 25 is controlled so that fuel from the canister 122 is allowed into the inlet duct 104 so as to mix with air, allowed by the open throttle valve 110. Thereby, by means of the piston 103 movement(s), air and fuel are pumped through the cylinder(s) 103, and transported through the exhaust duct 106, in which a air/fuel mixture is provided, which reaches the catalytic converter 13 where it is combusted to increase the catalytic converter 13 temperature.

As in fig. 3, while the converter activation maintaining measures are taken, the control unit 109 determines 204 whether the catalytic converter 13 temperature is above a predetermined second temperature threshold value, which is higher than the first temperature threshold value, and if it is determined that the catalytic converter 13 temperature is above the second temperature threshold value, the motor 3 and the transmissions 4, 6 are controlled 205 so that rotation of the crankshaft 131 stops.

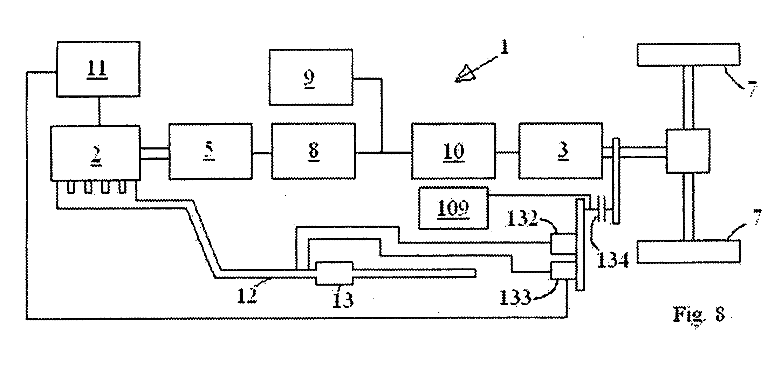

Referring to fig. 8, showing parts of a hybrid vehicle propulsion system 1 with a series hybrid structure, a further alternative embodiment of the invention will be described. The propulsion system I comprises an internal combustion engine 2 and an additional power source 3 in the form of an electric motor 3. The engine 2 is mechanically connected to a generator 5m which is electrically connected to a charger 8, which in turn is connected to a plurality of batteries 9, and to a converter 10, the latter being connected to the motor 3, which is mechanically connected to two wheels 7 of the vehicle. Fuel storage means 11 comprising a fuel tank 11, and an exhaust system 12 with an exhaust treatment device 13 in the form of a catalytic converter 13 are provided for the engine 2.

The propulsion system 1 comprises an air pump 132 and a fuel pump 133 adapted to supply air and fuel into the exhaust system 12 upstream from the catalytic converter 13. The fuel pump is adapted to be fed from the fuel tank 11. The air pump 132 and the fuel pump are adapted to be driven by the motor 3 via a mechanical connection, including for example belt drives, and also a clutch 134, controllable by a control unit 109 for engagement and disengagement of the pumps 132, 133 with the motor 3.

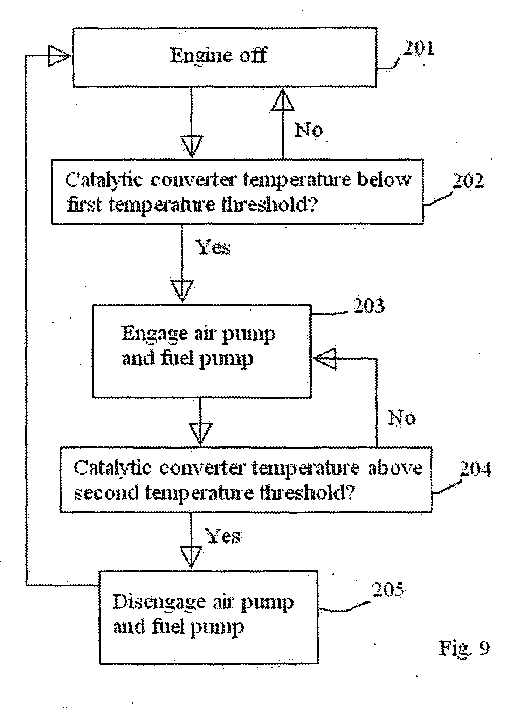

Fig. 9 depicts a method according to the further alternative embodiment of the invention, in the hybrid vehicle propulsion system 1 in fig. 8. The method corresponds to the one that has been described above with reference to fig. 3, with some exceptions:
The control unit 109 determines 201 that the propulsion system 1 is to operate in a mode in which the engine is off. As in fig. 3, the catalytic converter 13 temperature is monitored by the control device 109. If it is determined 202 that the catalytic converter 13 temperature is below a first temperature threshold value, converter activation maintaining measures are taken 203, in which the clutch 134 is controlled 203 so as to engage the pumps 132, 133. Thereby, air and fuel are introduced into the exhaust system 12 to form a mixture, which reaches the catalytic converter 13 where it is combusted to increase the catalytic converter 13 temperature.

As in fig. 3, while the converter activation maintaining measures are taken, the control unit 109 determines 204 whether the catalytic converter 13 temperature is above a predetermined second temperature threshold value, which is higher than the first temperature threshold value, and if it is determined that the catalytic converter 13 temperature is above the second temperature threshold value, the clutch 134 is controlled 205 so as to disengage the pumps 132, 133.

It should be noted that instead of the motor 3, the air pump 132 and the fuel pump 133 in fig. 8 could be driven by some alternative driving device of the propulsion system 1.

The invention is of course also applicable to hybrid vehicles combining more than two power sources for its propulsion, one of them being an internal combustion engine.

Above, embodiments with spark ignition internal combustion engines have been described, but it should be noted that the invention is applicable to hybrid vehicle propulsion systems with alternative types of internal combustion engines, for example diesel engines. For a diesel engine, converter activation maintaining measures could for example involve, while the crankshaft is being rotated by the additional power source, injecting fuel during an exhaust stroke in the respective cylinder, i.e. when the respective exhaust valve(s) is (are) open.

## Claims

1. A method for an exhaust gas treatment device (13) for an internal combustion engine (2) of a drivetrain in a hybrid vehicle, the drivetrain further comprising an additional power source (3), the internal combustion engine (2) comprising a crankshaft (131) and at least one cylinder (102), the hybrid vehicle further comprising fuel storage means (11) and fuel provision means (111, 122, 125, 133), the exhaust gas treatment device (13) being located downstream from the cylinder (102), the operation of the hybrid vehicle including a plurality of modes for the power distribution in the drivetrain, one of the modes being an engine off mode, in which combustion in the at least one cylinder (102) is inhibited, the method comprising, in the engine off mode, pumping air (203) to the exhaust gas treatment device (13), and controlling (203) the fuel provision means (111, 122, 125, 133) so that fuel is allowed to the exhaust gas treatment device (13), **characterized in that** the method comprises, in the engine off mode, monitoring the temperature of the exhaust gas treatment device (13) and, if the temperature of the exhaust gas treatment device (13) is below a temperature threshold value, performing the steps of pumping air (203) to the exhaust gas treatment device (13), and controlling (203) the fuel provision means (111, 122, 125, 133) so that fuel is allowed to the exhaust gas treatment device (13) in order to prevent the temperature of the exhaust gas treatment device (13) from falling below its activation temperature during the engine off mode.

2. A method according to claim 1, wherein the step of pumping air (203) to the exhaust gas treatment device (13) comprises rotating the crankshaft (131) of the engine (2) by means of the additional power source (3), and the step of controlling (203) the fuel provision means (111, 122, 125, 133) comprises controlling (203) the fuel provision means (111, 122, 125, 133) so that fuel is allowed into at least one of the cylinders (102).

3. A method according to claim 2, comprising determining the temperature of the exhaust gas treatment device (13), the amount of fuel allowed into the at least one of the cylinders (102), in the step of controlling (203) the fuel provision means (111, 122, 125, 133), being controlled in dependence on the temperature of the exhaust gas treatment device (13).

4. A method according to any of the claims 2-3, comprising controlling, during the step of rotating the crankshaft (131) of the engine (2) by means of the additional power source (3), air flow control means (10) of the engine (2) so as to control the combustion in the exhaust gas treatment device (13).

5. A method according to claim 4, wherein controlling the combustion in the exhaust gas treatment device (13) comprises controlling a location or a region of a maximum temperature in the exhaust gas treatment device (13).

6. A method according to any of the claims 2-5, wherein the fuel provision means (111, 122, 125, 133) comprises fuel injection means (111), and the step of controlling (203) the fuel provision means (111, 122, 125, 133) comprises controlling (203) the fuel injection means (111) so that fuel is allowed into at least one of the cylinders (102).

7. A method according to claim 6, wherein the internal combustion engine (2) comprises at least two cylinders (102), the method further comprising determining the temperature of the exhaust gas treatment device (13), the number of cylinders (102) into which fuel is allowed, in the step of controlling (203) the fuel injection means (111), being dependent on the temperature of the exhaust gas treatment device (13).

8. A method according to any of the claims 2-7, wherein the fuel provision means (111, 122, 125, 133) comprises a fuel vapor retainer (122) and valve means (125) for controlling a supply of purge gas from the fuel vapor retainer (122) to the engine (2), and the step of controlling (203) the fuel provision means (111, 122, 125, 133) comprises controlling the valve means (125) so that purge gas is allowed into at least one of the cylinders (102).

9. A method according to any of the preceding claims, wherein the hybrid vehicle comprises an air pump (132) adapted to supply air downstream of the cylinder (102), and the fuel provision means (111, 122, 125, 133) comprises a fuel pump (133) adapted to supply fuel downstream of the cylinder (102), the step of pumping air (203) to the exhaust gas treatment device (13) comprising engaging the air pump (133), the step of controlling (203) the fuel provision means (111, 122, 125, 133) comprising engaging the fuel pump (133).

10. A hybrid vehicle propulsion system (1) comprising a drivetrain including an internal combustion engine (2) and an additional power source (3), the internal combustion engine (2) comprising a crankshaft (131) and at least one cylinder (102), the hybrid vehicle propulsion system further comprising fuel storage means (11) and fuel provision means (111, 122, 125, 133), an exhaust gas treatment device (13) being located downstream from the cylinder (102), and a control unit (109), the hybrid vehicle propulsion system being adapted to operate in a plurality of modes for the power distribution in the drivetrain, one of the modes being an engine off mode, in which combustion in the at least one cylinder (102) is inhibited, the hybrid vehicle propulsion system being adapted to, in the engine off mode, pump air (203) to the exhaust gas treatment device (13), the control unit (109) being adapted to, in the engine off mode, control (203) the fuel provision means (111, 122, 125, 133) so that fuel is allowed to the exhaust gas treatment device (13) when air is pumped to the exhaust gas treatment device, **characterized in that** it is adapted to, in the engine off mode, monitor the temperature of the exhaust gas treatment device (13) and, if the temperature of the exhaust gas treatment device (13) is below a temperature threshold value, pump air (203) to the exhaust gas treatment device (13), and control (203) the fuel provision means (111, 122, 125, 133) so that fuel is allowed to the exhaust gas treatment device (13) in order to prevent the temperature of the exhaust gas treatment device (13) from falling below its activation temperature during the engine off mode.

11. A system according to claim 10, adapted to pump air (203) to the exhaust gas treatment device (13) by rotating the crankshaft (131) of the engine (2) by means of the additional power source (3), and the control unit (109) is adapted to control (203) the fuel provision means (111, 122, 125, 133) so that fuel is allowed into at least one of the cylinders (102).

12. A system according to claim 11, wherein the control unit (109) is adapted to determine the temperature of the exhaust gas treatment device (13), and to control the fuel provision means in dependence on the temperature of the exhaust gas treatment device (13).

13. A system according to any of the claims 11-12, wherein the control unit (109) is adapted to control, during rotation of the crankshaft (131) by means of the additional power source (3), air flow control means (10) of the engine (2) so as to control the combustion in the exhaust gas treatment device (13).

14. A system according to claim 13, wherein the control unit (109) is adapted to control the combustion in the exhaust gas treatment device (13) by controlling a location or a region of a maximum temperature in the exhaust gas treatment device (13).

15. A system according to any of the claims 11-14, wherein the fuel provision means (111, 122, 125, 133) comprises fuel injection means (111), and the control unit (109) is adapted to control (203) the fuel provision means (111, 122, 125, 133) by controlling (203) the fuel injection means (111) so that fuel is allowed into at least one of the cylinders (102).

16. A system according to claim 15, wherein the internal combustion engine (2) comprises at least two cylinders (102), and the control unit (109) is adapted to determine the temperature of the exhaust gas treatment device (13), and to determine the number of cylinders (102) into which fuel is allowed in dependence on the temperature of the exhaust gas treatment device (13).

17. A system according to any of the claims 11-16, wherein the fuel provision means (111; 122, 125, 133) comprises a fuel vapor retainer (122) and valve means (125) for controlling a supply of purge gas from the fuel vapor retainer (122) to the engine (2), and the control unit (109) is adapted to control (203) the fuel provision means (111, 122, 125, 133) by controlling the valve means (125) so that purge gas is allowed into at least one of the cylinders (102).

18. A system according to any of claims 10-17, comprising an air pump (132) adapted to supply air downstream of the cylinder (102), the fuel provision means (111, 122, 125, 133) comprising a fuel pump (133) adapted to supply fuel downstream of the cylinder (102), the control unit (109) being adapted to control (203) the air pump (133), and to control (203) the fuel provision means (111, 122, 125, 133).

19. A hybrid vehicle comprising a propulsion system according to any of the claims 10-18.

## Patentansprüche

1. Verfahren für eine Abgasbehandlungsvorrichtung (13) für eine Brennkraftmasachine (2) eines Antriebsstrangs eines Hybridfahrzeugs, wobei der Antriebsstrang ferner eine zusätzliche Leistungsquelle (3) umfasst, wobei die Brennkraftmaschine (2) eine Kurbelwelle (131) und wenigstens einen Zylinder (102) umfasst, wobei das Hybridfahrzeug ferner Kraftstoffspeichermittel (11) und Kraftstoffbereitstellungsmittel (111, 122, 125, 133) umfasst, wobei sich die Abgasbehandlungsvorrichtung (13) stromabseitig des Zylinders (102) befindet, wobei der Betrieb des Hybridfahrzeugs mehrere Betriebsarten für die Leistungsverteilung in dem Antriebsstrang umfasst, wobei eine der Betriebsarten eine Betriebsart bei ausgeschalteter Maschine ist, in der die Verbrennung in dem wenigstens einen Zylinder (102) verhindert wird, wobei das Verfahren in der Betriebsart mit abgeschalteter Maschine das Pumpen (203) von Luft in die Abgasbehandlungsvorrichtung (13) und das Steuern (203) der Kraftstoffbereitstellungsmittel (111, 122, 125, 133) in der Weise, dass Kraftstoff in die Abgasbehandlungsvorrichtung (13) eingelassen wird, **dadurch gekennzeichnet, dass** das Verfahren in der Betriebsart mit abgeschalteter Maschine das Überwachen der Temperatur der Abgasbehandlungsvorrichtung (13) und, falls die Temperatur der Abgasbehandlungsvorrichtung (13) unter einem Temperaturschwellenwert liegt, das Ausführen der Schritte des Pumpens (203) von Luft in die Abgasbehandlungsvorrichtung (13) und des Steuerns (203) der Kraftstoffbereitstellungsmittel (111, 122, 125, 133) in der Weise, dass Kraftstoff in die Abgasbehandlungsvorrichtung (13) eingelassen wird, um zu verhindern, dass die Temperatur der Abgasbehandhungsvorrichtung (13) während der Betriebsart mit abgeschalteter Maschine unter deren Aktivierungstemperatur fällt, umfasst.

2. Verfahren nach Anspruch 1, wobei der Schritt des Pumpens (203) von Luft in die Abgasbehandlungsvorrichtung (13) das Drehen der Kurbelwelle (131) der Maschine (2) mittels der zusätzlichen Leistungsquelle (3) umfasst und der Schritt des Steuerns (203) der Kraftstoffbereitstellungsmittel (111, 122, 125, 133) das Steuern (203) der Kraftstoffbereitstellungsmittel (111, 122, 125, 133) in der Weise, dass Kraftstoff in wenigstens einen der Zylinder (102) eingelassen wird, umfasst.

3. Verfahren nach Anspruch 2, dass das Bestimmen der Temperatur der Abgasbehandlungsvorrichtung (13) umfasst, wobei die Kraftstoffmenge, die in den wenigstens einen der Zylinder (102) in dem Schritt des Steuerns (203) der Kraftstoffbereitstellungsmittel (111, 122, 125, 133) eingelassen wird, in Abhängigkeit von der Temperatur der Abgasbehandlungsvorrichtung (13) gesteuert wird,

4. Verfahren nach einem der Ansprüche 2-3, dass das Steuern von Luftdurchflusssteuermitteln (10) der Maschine (2) während des Schrittes des Drehens der Kurbelwelle (131) der Maschine (2) mittels der zusätzliches Leistungsquelle (3) umfasst, um die Verbrennung in der Abgasbehandlungsvorrichtung (13) zu steuern.

5. Verfahren nach Anspruch 4, wobei das Steuern der Verbrennung in der Abgasbehandiungsvorrichtung (13) das Steuern einer Steile oder eines Bereichs einer maximalen Temperatur in der Abgasbehandlungsvorrichtung (13) umfasst.

6. Verfahren nach einen der Anspruche 2-5, wobei die Kraftstoffbereitstellungsmittel (111, 122, 125, 133) Kraftstoffeinspritzmittel (111) umfassen und der Schritt des Steuerns (203) der Kraftstoffbereitstellungsmittel (111 , 122, 125, 133), das Steuern (203) der Kraftstoffeinspritzmittel (111) umfasst, so dass Kraftstoff in wenigstens einen der Zylinder (102) eingelassen wird.

7. Verfahren nach Anspruch 6, wobei die Brennkraftmaschine (2) wenigstens zwei Zylinder (102) umfasst, wobei das Verfahren ferner das Bestimmen der Temperatur der Abgasbehandlungsvorrichtung (13) umfasst, wobei die Anzahl von Zylindern (102), in die Kraftstoff eingelassen wird, in dem Schritt des Steuerns (203) der Kraftstoffeinspritzmittel (111) von der Temperatur der Abgasbehandlungsvorrichtung (13) abhängt.

8. Verfahren nach einem der Ansprüche 2-7, wobei die Kraftstoffbereitstellungsmittel (111, 122, 125, 133) eine Kraftstoffdampf-Rückhalteeinrichtung (122) und Ventilmittel (125) zum Steuern einer Zufuhr von Spülgas von der Kraftstoffdampf-Rückhalteeinrichtung (122) in die Maschine (2) umfassen und der Schritt des Steuerns (203) der Kraftstoffbereitstellungsmittel (111, 122, 125, 133) das Steuern der Ventilmittel (125) umfasst, so dass Spülgas in wenigstens einen der Zylinder (102) eingelassen wird.

9. Verfahren nach einem der vorhergehenden Ansprüche, wobei das Hybridfahrzeug eine Luftpumpe (132) umfasst, die dazu ausgelegt ist, Luft stromabseitig des Zylinders (102) zuzuführen, und die Kraftstoffbereitstellungsmittel (111, 122, 125, 133) eine Kraftsroffpumpe (133) umfassen, die dazu ausgelegt ist, Kraftstoff stromabseitig des Zylinders (102) zuzuführen, wobei der Schritt des Pumpen (203) von Luft zu der Abgasbehandlungsvorrichtung (13) das Einschalten der Luftpumpe (133) umfasst und der Schritt des Steuerns (203) der Kraftstoffbereitstellungsmittel (111, 122, 125, 133) das Einschalten der Kraftstoffpumpe (133) umfasst.

10. Hybridfahrzeug-Vortriebssystem (1), das einen Antriebsstrang umfasst, der eine Brennkraftmaschine (2) und eine zusätzliche Leistungsquelle (3) enthält, wobei die Brennkraftmaschine (2) eine Kurbelwelle (131) und wenigstens einen Zylinder (102) umfasst, wobei das Hybridfahrzeug-Vortriebssystem ferner Kraftstoffspeichermittel (11) und Kraftstoffbereitstellungsmittel (111, 122, 125, 133) umfasst, wobei sich eine Abgasbehandlungsvorrichtung (13) stromabseitig des Zylinders (102) befindet, und eine Steuereinheit (109) umfasst, wobei das Hybridfahrzeug-Vortriebssystem dazu ausgelegt ist, in mehreren Betriebsarten für die Leistungsverteilung in dem Antriebsstrang zu arbeiten, wobei eine der Betriebsarten eine Betriebsart mit abgeschalteter Maschine ist, in der eine Verbrennung in den wenigstens einen Zylinder (102) verhindert wird, wobei das Hybridfahrzeug-Vortriebssystem dazu ausgelegt ist, in der Betriebsart mit abgeschalteter Maschine Luft in die Abgasbehandlungsvorrichtung (13) zu pumpen (203), wobei die Steuereinheit (109) dazu ausgelegt ist, in der Betriebsart mit abgeschalteter Maschine die Kraftstoffbereitstellungsmittel (111, 122, 125, 133) in der Weise zu steuern (203), dass Kraftstoff in die Abgasbehandlunggvorrichtung (13) eingelassen wird, wenn Luft zu der Abgasbehandlungsvorrichtung gepumpt wird, **dadurch gekennzeichnet**e dass es dazu ausgelegt ist, in der Betriebsart mit abgeschalteter Maschine die Temperatur der Abgasbehandlungsvorrichtung (13) zu überwachen und, falls die Temperatur der Abgasbehandlungsvorrichtung (13) unter einem Temperaturschwellenwert liegt, Luft zu der Abgasbehandlungsvorrichtung (13) zum pumpen (203) und die Kraftstoffbereitstellungsmittel (111, 122, 125, 133) in der Weise zu steuern (203), dass Kraftstoff in die Abgasbehandlungsvorrichtung (13) eingelassen wird, um zu verhindern, dass die Temperatur der Abgasbehandlungsvorrichtung (13) während der Betriebsart mit abgeschalteter Maschine unter ihre Aktivierungstemperatur abfällt.

11. System nach Anspruch 10, das dazu ausgelegt ist, Luft zu der Abgasbehandlungsvorrichtung (13) durch Drehen der Kurbelwelle (131) der Maschine (2) mittels der zusätzlichen Leistungsquelle (3) zu pumpen, und die Steuereinheit (109) dazu ausgelegt ist, die Kraftstoffbereitstellungsmittel (111, 122, 125, 133) in der Weise zu steuern (203), dass Kraftstoff in wenigstens einen der Zylinder (102) eingelassen wird.

12. System nach Anspruch 11, wobei die Steuereinheit (109) dazu ausgelegt ist die Temperatur der Abgasbehandlungsvorrichtung (13) zu bestimmen und die Kraftstoffbereitstellungsmittel in Abhängigkeit von der Temperatur der Abgasbehandlungsvorrichtung (13) zu steuern.

13. System nach einem der Ansprüche 11-12, wobei die Steuereinheit (109) dazu ausgelegt ist, während der Drehung der Kurbelwelle (131) mittels der zusätzlichen Leistungsquelle (3) Luftdurchflusssteuermittel (10) der Maschine (2) zu steuern, um die Verbrennung in der Abgasbehandlungsvorrichtung (13) zu steuern.

14. System nach Anspruch 13, wobei die Steuereinheit (109) dazu ausgelegt ist, die Verbrennung in der Abgasbehandlungsvorrichtung (13) durch Steuern einer Stelle oder eines Bereichs mit maximaler Temperatur in der Abgasbehandlungsvorrichtung (13) zu steuern.

15. System nach einem der Ansprüche 11-14, wobei die Kraftstoffbereitstellungsmittel (111, 122, 125, 133) Kraftstoffeinspritzmittel (111) umfassen und die Steuereinheit (109) dazu ausgelegt ist, die Kraftstoffbereitstellungsmittel (111, 122) 125, 133) durch Steuern (203) der Kraftstoffeinspritzmittel (111) in der Weise zu steuern, dass Kraftstoff in wenigstens einen der Zylinder (102) eingelassen wird.

16. System nach Anspruch 15, wobei die Brennhafunaschine (2) wenigstens zwei Zylinder (102) umfasst, und die Steuereinheit (109) dazu ausgelegt ist, die Temperatur der Abgasbehandlungsvorrichtung (13) zu bestimmen und die Anzahl von Zylindern (102), in die Kraftstoff eingelassen wird, in Abhängigkeit von der Temperatur der Abgasbehandlungsvorrichtung (13) zu bestimmen.

17. System nach einem der Ansprüche 11-16, wobei die Kraftstoffbereitstellungsmittel (111, 122, 125, 133) eine Kraftstoffdampf-Rückhalteeinrichtung (122) und Ventilmittel (125) zum Steuern einer Zufuhr von Spülgas von der Kraftstoffdampf-Rückhalteeinrichtung (122) zu der Maschine umfassen und die Steuereinheit (109) dazu ausgelegt ist, die Kraftstoffbereitstellungsmittel (111, 122, 125, 133) durch Steuern der Ventilmittel (125) in der Weise zu steuern, dass Spülgas in wenigstens einen der Zylinder (102) eingelassen wird.

18. System nach einem der Ansprüche 10-17, das eine Luftpumpe (132) umfasst, die dazu ausgelegt ist, Luft stromabseitig des Zylinders (102) zuzuführen, wobei die Kraftsoffbereitstellungsmittel (111, 122, 125, 133) eine Kraftstoffpumpe (133) umfassen, die dazu ausgelegt sind, Kraftstoff stromabseitig des Zylinders (102) zuzuführen, wobei die Steuereinheit (109) dazu ausgelegt ist, die Luftpumpe (133) zu steuern (203) und die Kraftstoffbereitstellungsmittel (111, 122, 125, 133) zu steuern (203).

19. Hybridfahrzeug, das ein Vortriebssystem nach einem der Ansprüche 10-18 umfasst.

## Revendications

1. Procédé pour un dispositif de traitement de gaz d'échappement (13) pour un moteur à combustion interne (2) d'une transmission dans un véhicule hybride, la transmission comprenant en outre une source d'énergie additionnelle (3), le moteur à combustion interne (2) comprenant un vilebrequin (131) et au moins un cylindre (102), le véhicule hybride comprenant en outre des moyens de stockage de carburant (11) et des moyens de fourniture de carburant (111, 122, 125, 133), le dispositif de traitement de gaz d'échappement (13) étant situé, en aval du cylindre (102), le fonctionnement du véhicule hybride incluant une pluralité de modes pour la distribution d'énergie dans la transmission, l'un des modes étant un mode à moteur thermique à l'arrêt, dans lequel la combustion dans le au moins un cylindre (102) est empêchée, le procédé comprenant, dans le mode à moteur thermique à l'arrêt, le pompage d'air (203) vers le dispositif de traitement de gaz d'échappement (13), et la commande (203) des moyens de fourniture de carburant (111, 122, 125, 133), de manière que du carburant soit autorisé à aller au dispositif de traitement de gaz d'échappement (13), **caractérisé en ce que** le procédé comprend, dans le mode à moteur thermique à l'arrêt, la surveillance de la température du dispositif de traitement de gaz d'échappement (13) et, si la température du dispositif de traitement de gaz d'échappement (13) est inférieure à une valeur seuil de température, l'accomplissement des étapes de pompage d'air (203) vers le dispositif de traitement de gaz d'échappement (13), et de commande (203) des moyens de fourniture de carburant (111, 122, 125, 133), de manière que du carburant soit autorisé à aller au dispositif de traitement de gaz d'échappement (13), de manière à empêcher que la température du dispositif de traitement de gaz d'échappement (13) chute au-dessous de sa température d'activation durant le mode à moteur thermique à l'arrêt.

2. Procédé selon la revendication 1, dans lequel l'étape de pompage d'air (203) vers le dispositif de traitement de gaz d'échappement (13) comprend la mise en rotation du vilebrequin (131) du moteur (2) au moyen de la source d'énergie additionnelle (3), et l'étape de commande (203) des moyens de fourniture de carburant (111, 122, 125, 133) comprend la commande (203) des moyens de fourniture de carburant (111, 122, 125, 133), de manière que du carburant soit autorisé à aller dans au moins l'un des cylindres (102).

3. Procédé selon la revendication 2, comprenant la détermination de la température du dispositif de traitement de gaz d'échappement (13), la quantité de carburant autorisée à aller dans au moins l'un des cylindres (102), dans l'étape de commande (203) des moyens de fourniture de carburant (111, 122, 125, 133), étant commandée en fonction de la température du dispositif de traitement de gaz d'échappement (13).

4. Procédé selon l'une quelconque des revendications 2 à 3, comprenant la commande, durant l'étape de mise en rotation du vilebrequin (131) du moteur (2) au moyen de la source d'énergie additionnelle (3), de moyens de commande d'écoulement d'air (10) du moteur (2), de manière à commander la combustion dans le dispositif de traitement de gaz d'échappement (13).

5. Procédé selon la revendication 4, dans lequel la commande de la combustion dans le dispositif de traitement de gaz d'échappement (13) comprend la commande d'un emplacement ou d'une région à une température maximale dans le dispositif de traitement de gaz d'échappement (13).

6. Procédé selon l'une quelconque des revendications 2 à 5, dans lequel les moyens de fourniture de carburant (111, 122, 125, 133) comprennent des moyens d'injection de carburant (111), et l'étape de commande (203) des moyens de fourniture de carburant (111, 122, 125, 133) comprend la commande (203) des moyens d'injection de carburant (111), de manière que du carburant soit autorisé à aller dans au moins l'un des cylindres (102).

7. Procédé selon la revendication 6, dans lequel le moteur à combustion interne (2) comprend au moins deux cylindres (102), le procédé comprenant en outre la détermination de la température du dispositif de traitement de gaz d'échappement (13), le nombre de cylindres (102) dans lesquels du carburant est autorisé à pénétrer, à l'étape de commande (203) des moyens d'injection de carburant (111), étant fonction de la température du dispositif de traitement de gaz d'échappement (13).

8. Procédé selon l'une quelconque des revendications 2 à 7, dans lequel les moyens de fourniture de carburant (111, 122, 125, 133) comprennent un organe de retenue de vapeur de carburant (122) et des moyens de soupape (125), pour commander une amenée de gaz de purge, allant de l'organe de retenue de vapeur de carburant (122) au moteur (2), et l'étape de commande (203) des moyens de fourniture de carburant (111, 122, 125, 133) comprend la commande des moyens de soupape (125) de manière que du gaz de purge soit autorisé à pénétrer dans au moins l'un des cylindres (102).

9. Procédé selon l'une quelconque des revendications précédentes, dans lequel le véhicule hybride comprend une pompe à air (132) adaptée pour fournir de l'air en aval du cylindre (102), et les moyens de fourniture de carburant (111, 122, 125, 133) comprennent une pompe à carburant (133) adaptée pour fournir du carburant en aval du cylindre (102), l'étape de pompage d'air (203) vers le dispositif de traitement de gaz d'échappement (13) comprenant l'actionnement de la pompe à air (132), l'étape de commande (203) des moyens de fourniture de carburant (111, 122, 125, 133) comprenant l'actionnement de la pompe à carburant (133).

10. Système de propulsion pour véhicule hybride (1), comprenant une transmission comprenant un moteur à combustion interne (2) et une source d'énergie additionnelle (3), le moteur à combustion interne (2) comprenant un vilebrequin (131) et au moins un cylindre (102), le système de propulsion pour véhicule hybride comprenant en outre des moyens de stockage de carburant (11) et des moyens de fourniture de carburant (111, 122, 125, 133), un dispositif de traitement de gaz d'échappement (13) étant situé en aval du cylindre (102), et une unité de commande (109), le système de propulsion pour véhicule hybride étant adapté pour fonctionner en une pluralité de modes pour la distribution d'énergie dans la transmission, l'un des modes étant un mode à moteur thermique à l'arrêt, dans lequel la combustion dans le au moins un cylindre (102) est empêchée, le système de propulsion pour véhicule hybride étant adapté pour, dans le mode à moteur thermique à l'arrêt, effectuer un pompage d'air (203) vers le dispositif de traitement de gaz d'échappement (13), l'unité de commande (109) étant adaptée pour, dans le mode à moteur thermique à l'arrêt, commander (203) les moyens de fourniture de carburant (111, 122, 125, 133), de manière que du carburant soit autorisé à aller au dispositif de traitement de gaz d'échappement (13) lorsque de l'air est pompé vers le dispositif de traitement de gaz d'échappement, **caractérisé en ce qu'**il est adapté, dans le mode à moteur thermique à l'arrêt, pour surveiller la température du dispositif de traitement de gaz d'échappement (13) et, si la température du dispositif de traitement de gaz d'échappement (13) est inférieure à une valeur seuil de température, pour pompeur de l'air (203) vers le dispositif de traitement de gaz d'échappement (13), et commander (203) les moyens de fourniture de carburant (111, 122, 125, 133), de manière que du carburant soit autorisé à aller au dispositif de traitement de gaz d'échappement (13) de manière à empêcher que la température du dispositif de traitement de gaz d'échappement (13) chute au-dessous de sa température d'activation durant le mode à moteur thermique à l'arrêt.

11. Système selon la revendication 10, adapté pour pomper de l'air (203) vers le dispositif de traitement de gaz d'échappement (13), par mise en rotation du vilebrequin (131) du moteur (2) au moyen de la source d'énergie additionnelle (3), est l'unité de commande (109) est adaptée pour commander (203) les moyens de fourniture de carburant (111, 122, 125, 133), de manière que du carburant soit autorisé à aller dans au moins l'un des cylindres (102).

12. Système selon la revendication 11, dans lequel l'unité de commande (109) est adaptée pour déterminer la température du dispositif de traitement de gaz d'échappement (13), et pour commander les moyens de fourniture de carburant en fonction de la température du dispositif de traitement de gaz d'échappement (13)

13. Système selon l'une quelconque des revendications 11 à 12, dans lequel l'unité de commande (109) est adaptée pour commander, durant la rotation du vilebrequin (131) au moyen de la source d'énergie additionnelle (3), des moyens de commande d'écoulement d'air (10) du moteur (2), de manière à commander la combustion dans le dispositif de traitement de gaz d'échappement (13).

14. Système selon la revendication 13, dans lequel l'unité de commande (109) est adaptée pour commander la combustion dans le dispositif de traitement de gaz d'échappement (13), par commande d'un emplacement ou d'une région à une température maximale dans le dispositif de traitement de gaz d'échappement (13).

15. Système selon l'une quelconque des revendications 11 à 14, dans lequel les moyens de fourniture de carburant (111, 122, 125, 133) comprennent des moyens d'injection de carburant (111), et l'unité de commande (109) est adaptée pour commander (203) les moyens de fourniture de carburant (111, 122, 125, 133) par commande des moyens d'injection de carburant (111), de manière que du carburant soit autorisé à aller dans au moins l'un des cylindres (102).

16. Système selon la revendication 15, dans lequel le moteur à combustion interne (2) comprend au moins deux cylindres (102), et l'unité de commande (109) est adaptée pour déterminer température du dispositif de traitement de gaz d'échappement (13), et pour déterminer le nombre de cylindres (102) dans lesquels du carburant est autorisé à pénétrer, en fonction de la température du dispositif de traitement de gaz d'échappement (13).

17. Système selon l'une quelconque des revendications 11 à 16, dans lequel les moyens de fourniture de carburant (111, 122, 125, 133) comprennent un organe de retenue de vapeur de carburant (122) et des moyens de soupape (125), pour commander une amenée de gaz de purge, allant de l'organe de retenue de vapeur de carburant (122) au moteur (2), et l'unité de commande (103) est adaptée pour commander (203) les moyens de fourniture de carburant (111, 122, 125, 133) par commande des moyens de soupape (125) de manière que du gaz de purge soit autorisé à pénétrer dans au moins l'un des cylindres (102).

18. Système selon l'une quelconque des revendications 10 à 17, comprenant une pompe à air (132) adaptée pour fournir de l'air en aval du cylindre (102), les moyens de fourniture de carburant (111, 122, 125, 133) comprenant une pompe à carburant (133), adaptée pour fournir du carburant en aval du cylindre (102), l'unité de commande (109) étant adaptée pour commander (203) la pompe à air (132), et pour commander (203) les moyens de fourniture de carburant (111, 122, 125, 133).

19. Véhicule hybride comprenant un système de propulsion selon l'une quelconque des revendications 10 à 18.
